# FASCICULE DE BREVET EUROPEEN

(11) **EP 1 566 129 B1**
(45) Date de publication et mention de la délivrance du brevet: **06.09.2006**
(21) Numéro de dépôt: 05356025.6
(22) Date de dépôt: 08.02.2005
(51) Int. Cl.: A47J 43/07

(54) **Appareil électroménager de préparation culinaire**
Elektrisches Haushaltsgerät zur Nahrungszubereitung
Electric household appliance for food processing

(30) Priorité: 20.02.2004 FR 0401713
(43) Date de publication de la demande: 24.08.2005
(73) Titulaire: SEB S.A., 69130 Ecully (FR)
(72) Inventeur: Radigue, Jean Jacques, 53100 Mayenne (FR); Louvel, Christophe, 35000 Rennes (FR); Paumard, Jonathan, 53470 Martigne s/Mayenne (FR)
(74) Mandataire: Kiehl, Hubert

(56) Documents cités:
- EP-A- 0 025 972
- FR-A- 2 447 703
- US-A- 4 213 569

## Description

La présente invention concerne le domaine technique général des appareils électroménagers de préparation culinaire tels que notamment les robots ménager multifonctions. La présente invention est relative à un appareil comportant un socle sur lequel repose un récipient de travail et un caisson adjacent au récipient de travail, le récipient comportant un couvercle amovible muni d'une patte qui s'insère par rotation dans une fente du caisson et se rapporte plus particulièrement aux moyens de verrouillage du couvercle sur le caisson.

On connaît, du document EP 025 972, un robot ménager comportant un bol de travail coiffé par un couvercle amovible et un moteur entraînant un outil rotatif monté dans le fond du récipient de travail, le moteur étant mis en route par l'utilisateur au moyen d'un bouton de commande. Le robot comporte également un caisson adjacent au récipient de travail comprenant un verrou de sécurité monté mobile qui coopère avec une patte du couvercle pour immobiliser le couvercle et n'autoriser l'actionnement du bouton de commande du moteur que lorsque le couvercle est immobilisé. Le robot comporte également un bouton de déverrouillage qui agit sur le verrou de sécurité pour libérer le couvercle.

Un tel dispositif de verrouillage du couvercle présente cependant l'inconvénient d'être relativement encombrant, en particulier verticalement, et d'imposer une disposition des boutons de commande du moteur et de déverrouillage du couvercle sur deux faces différentes du caisson, ce qui conduit souvent à avoir l'un des boutons visuellement caché par le corps de l'appareil.

L'invention qui suit vise à pallier ces inconvénients en proposant notamment un appareil électroménager dans lequel le dispositif de sécurité, assurant le verrouillage du couvercle et le blocage du bouton de commande du moteur lorsque le couvercle n'est pas verrouillé, est d'une grande compacité et utilise un nombre réduit de pièces. Un autre but de la présente invention est de proposer un appareil électroménager dans lequel le dispositif de sécurité permet un regroupement du bouton de commande du moteur et du bouton de déverrouillage du couvercle sur une même face de l'appareil.

Le but de l'invention est atteint par un appareil électroménager de préparation culinaire comportant un boîtier comprenant un socle sur lequel repose un récipient de travail et un caisson adjacent au récipient, le boîtier comportant un moteur entraînant un outil rotatif dont le fonctionnement est géré au moyen d'un bouton de commande, le récipient de travail comportant un couvercle amovible, du type à verrouillage par rotation, muni d'une patte de verrouillage s'insérant dans une fente pratiquée dans le caisson pour coopérer avec un dispositif de sécurité assurant le verrouillage du couvercle et empêchant l'actionnement du bouton de commande lorsque le couvercle n'est pas verrouillé, le déverrouillage du couvercle s'effectuant par l'actionnement d'un bouton de déverrouillage, caractérisé en ce que le dispositif de sécurité comporte une tige de sécurité dont une extrémité vient au contact avec la patte de verrouillage lors de la fermeture du couvercle, la tige de sécurité se déplaçant suivant un mouvement de rotation et de translation lors de la rotation du couvercle en vue de son verrouillage et en ce que le bouton de commande du moteur et le bouton de déverrouillage du couvercle sont regroupés sur une même face de l'appareil.

Une telle caractéristique présente l'avantage d'offrir un dispositif de sécurité compact et avec un nombre de pièces limité ainsi qu'une bonne ergonomie d'utilisation des boutons.

Selon une autre caractéristique de l'invention, le bouton de commande du moteur et le bouton de déverrouillage sont concentriques et sont disposés sur le caisson à proximité de la tige de sécurité.

Cette caractéristique permet d'améliorer encore l'ergonomie des boutons de commande et de déverrouillage.

Selon une autre caractéristique de l'invention, le bouton de commande du moteur entoure le bouton de déverrouillage, le bouton de commande du moteur étant du type rotatif et le bouton de déverrouillage étant du type poussoir.

Selon une autre caractéristique de l'invention, le bouton de déverrouillage occupe deux positions d'enfoncement distinctes en fonction de l'état du verrouillage de la tige de sécurité.

Une telle caractéristique présente l'avantage de permettre l'identification visuelle de l'état de verrouillage du dispositif de sécurité.

Selon encore une autre caractéristique de l'invention, la tige de sécurité est montée pivotante autour d'un axe pouvant se déplacer en translation au travers d'un logement réalisé sur une platine support.

Une telle caractéristique permet d'obtenir simplement une liaison autorisant le basculement et la translation de la tige de sécurité.

Selon encore une autre caractéristique de l'invention, l'axe de pivotement de la tige de sécurité est incliné par rapport au plan de rotation du couvercle.

Une telle caractéristique permet d'obtenir une orientation des boutons de commande du moteur et du déverrouillage du couvercle vers l'avant de l'appareil.

Selon une autre caractéristique de l'invention, l'extrémité de la tige de sécurité comporte une rampe de guidage de telle sorte que l'appui de la patte du couvercle sur la rampe de guidage provoque le mouvement de pivotement de la tige de sécurité.

Selon encore une autre caractéristique de l'invention, l'extrémité de la tige de sécurité comporte une cavité dans laquelle s'insère l'extrémité de la patte de verrouillage lorsque la tige de sécurité est déplacée radialement au couvercle et en direction de la patte de verrouillage du couvercle, sous l'effet de moyens de rappel, au cours de l'opération de verrouillage du couvercle.

Une telle caractéristique permet une immobilisation simple et fiable du couvercle sur le caisson.

Selon encore une autre caractéristique de l'invention, les moyens de rappel sont constitués par un ressort porté par l'extrémité de la tige opposée au couvercle et le ressort prend appui sur un plan incliné de la platine support de sorte que le pivotement de la tige de sécurité lors du verrouillage du couvercle provoque la compression du ressort.

Selon encore une autre caractéristique de l'invention, le mouvement de translation de la tige de sécurité s'effectue successivement à son mouvement de pivotement, la platine support comportant un crochet de verrouillage sur lequel vient buter une paroi de la tige de sécurité avant le pivotement complet de cette dernière, empêchant ainsi la translation de la tige de sécurité dans une première phase du mouvement de la tige, tandis qu'une fois le pivotement de la tige de sécurité effectué, la paroi de la tige de sécurité s'insère par translation sous le crochet de verrouillage empêchant ainsi tout mouvement de pivotement de la tige de sécurité.

Selon une autre caractéristique de l'invention, le bouton de déverrouillage comporte une surface inclinée venant au contact de la tige de sécurité qui provoque le déplacement de la tige de sécurité à l'encontre des moyens de rappel lorsque l'on appuie sur le bouton de déverrouillage.

Une telle caractéristique procure un moyen simple pour déplacer la tige de sécurité en vue du déverrouillage du couvercle.

Selon une autre caractéristique de l'invention, le corps de la tige de sécurité s'oppose à l'actionnement du bouton de commande du moteur lorsque la tige de sécurité est dans la position correspondant à la position déverrouillée du couvercle.

Selon une autre caractéristique de l'invention, le bouton de commande est lié en rotation à une couronne et la couronne comporte une partie interférant avec le corps de la tige de sécurité pour empêcher la rotation du bouton de commande lorsque la tige de sécurité est dans la position déverrouillée.

Selon une autre caractéristique de l'invention, la tige de sécurité comporte des ouvertures venant en regard de ladite partie de la couronne lorsque la tige de sécurité est dans la position verrouillée de sorte que le bouton de commande puisse être tourné.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue générale, en perspective, de la face avant d'un robot selon un mode de réalisation particulier de l'invention ;
- la figure 2 est une vue en perspective de la face arrière du robot de la figure 1 ;
- la figure 3 est une vue similaire à la figure 1 dans laquelle le boîtier du robot est partiellement arraché de manière à laisser apparaître le dispositif de sécurité du robot assurant le verrouillage du couvercle ;
- la figure 4 est une vue de face, éclatée, du dispositif de sécurité du robot de la figure 1 ;
- la figure 5 est une vue de dos, éclatée, du dispositif de sécurité du robot de la figure 1 ;
- la figure 6 est une vue de face, agrandie, de la platine supportant le bouton de commande du moteur, le bouton de déverrouillage du couvercle et le dispositif de sécurité du robot assurant le verrouillage du couvercle, l'ensemble étant représenté dans une position correspondant au couvercle non verrouillé ;
- la figure 7 est une vue de côté de la platine de la figure 6 représentée seule ;
- la figure 8 est une vue de l'autre côté de la platine représentée à la figure 7 ;
- la figure 9 est une vue en perspective de la platine supportant le dispositif de sécurité du robot, sans le bouton de commande du moteur ni le bouton de déverrouillage, dans la position correspondant au couvercle déverrouillé ;
- la figure 10 est une vue de dessus de la platine de la figure 6 ; ,
- la figure 11 est une vue en coupe suivant la ligne XI-XI de la figure 7 ;
- la figure 12 est une vue similaire à la figure 9 lorsque le dispositif de sécurité est dans la position correspondant au couvercle verrouillé ;
- la figure 13 est une vue similaire à la figure 11 représentant le dispositif de sécurité du robot dans la position correspondant au couvercle verrouillé ;
- la figure 14 est une vue en perspective d'un côté de la platine avec le dispositif de sécurité en position couvercle verrouillé et le bouton de commande du moteur tourné de quelques degrés dans le sens anti-horaire pour la mise en marche continue du moteur du robot ;
- la figure 15 est une vue en perspective de l'autre côté de la platine avec le dispositif de sécurité en position couvercle verrouillé et le bouton de commande tourné de quelques degrés dans le sens horaire pour la mise en marche du moteur par impulsion.

Seuls les éléments nécessaires à la compréhension de l'invention ont été représentés. Pour faciliter la lecture des dessins les mêmes éléments portent les mêmes références d'une figure à l'autre.

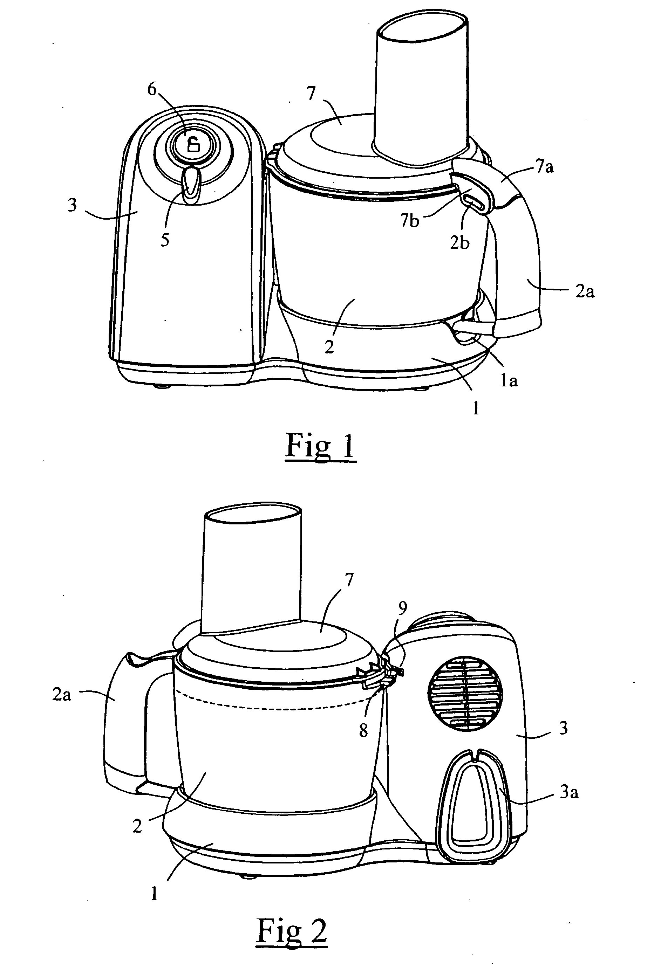

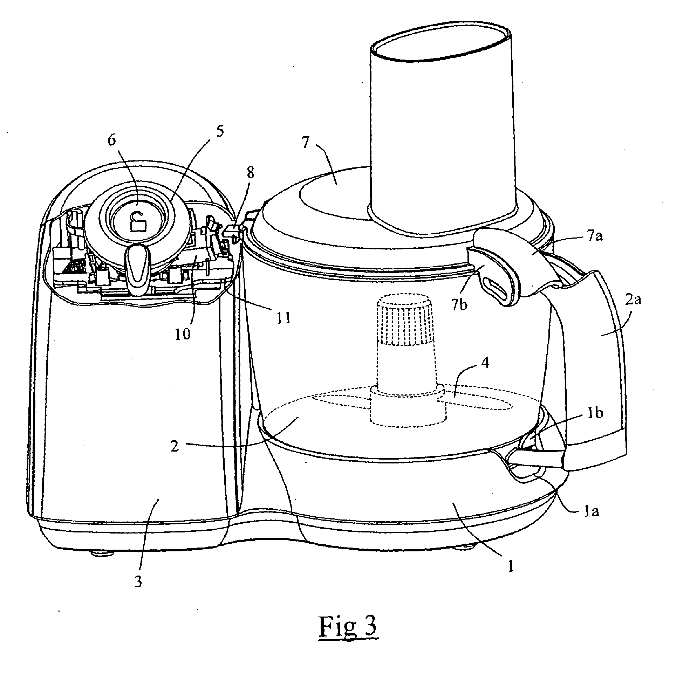

Le robot ménager ou appareil électroménager de préparation culinaire illustré aux figures 1 à 3 comprend un boîtier muni d'un socle 1 destiné à recevoir un récipient 2, en forme de bol, muni d'une poignée 2a et fermé par un couvercle 7. Le socle 1 est adjacent à un caisson 3 dans lequel est disposé un moteur entraînant, par l'intermédiaire d'une transmission, un outil rotatif 4 (figure 3) au travers du fond du récipient 2.

Le caisson 3 est muni dans sa partie supérieure d'un bouton rotatif 5 permettant de commander la mise en marche du moteur, le bouton rotatif 5 recevant en son centre un bouton de déverrouillage 6 du couvercle 7.

L'appareil comporte dans sa partie arrière (figure 2) un support de câble 3a autour duquel le câble d'alimentation électrique du moteur peut être enroulé lors de son rangement.

Le socle 1 présente une empreinte servant de logement de réception au récipient 2, cette empreinte comportant une échancrure latérale 1a munie d'un ergot de blocage 1b sous lequel le bras de liaison de la poignée 2a peut être partiellement introduit et qui constitue un moyen de retenue du récipient 2 sur le socle 1.

Le couvercle 7 qui est rapporté sur le récipient 2 présente une jupe inférieure s'insérant dans le récipient pour assurer le centrage du couvercle 7 et est bordé d'une nervure venant reposer sur le bord supérieur du récipient 2. Le couvercle 7 possède sur sa périphérie une partie formant une portion de poignée 7a venant compléter la forme supérieure de la poignée 2a du récipient 2, cette dernière comportant une forme échancrée à cet endroit.

La portion de poignée 7a comporte, sur l'un de ses côtés, une plaque d'accrochage 7b venant se placer de manière adjacente à la poignée 2a du récipient lors de la rotation du couvercle 7. Cette plaque d'accrochage 7b comporte une ouverture formant une mortaise dans laquelle vient s'insérer un tenon 2b porté par le bord latéral de la poignée 2a du récipient, la pénétration du tenon 2b dans l'ouverture de la plaque d'accrochage 7b participant à la retenue verticale du couvercle 7 sur le récipient 2. La plaque d'accrochage 7b sert également de butée latérale empêchant la rotation du récipient 2 dans le sens du désengagement du bras de liaison de la poignée 2a de l'ergot de blocage 1b.

Le couvercle 7 comporte, en regard du caisson 3, une patte de verrouillage 8 qui vient s'insérer, par rotation du couvercle 7, dans une fente 9 du caisson 3 lorsque la portion de poignée 7a du couvercle est amenée dans l'alignement de la poignée 2a du récipient. Cette patte de verrouillage 8 immobilise le couvercle à la fois verticalement et en rotation.

Plus particulièrement selon l'invention, le verrouillage de la patte 7 du couvercle s'effectue au moyen d'un dispositif de sécurité disposé à l'intérieur du caisson 3.

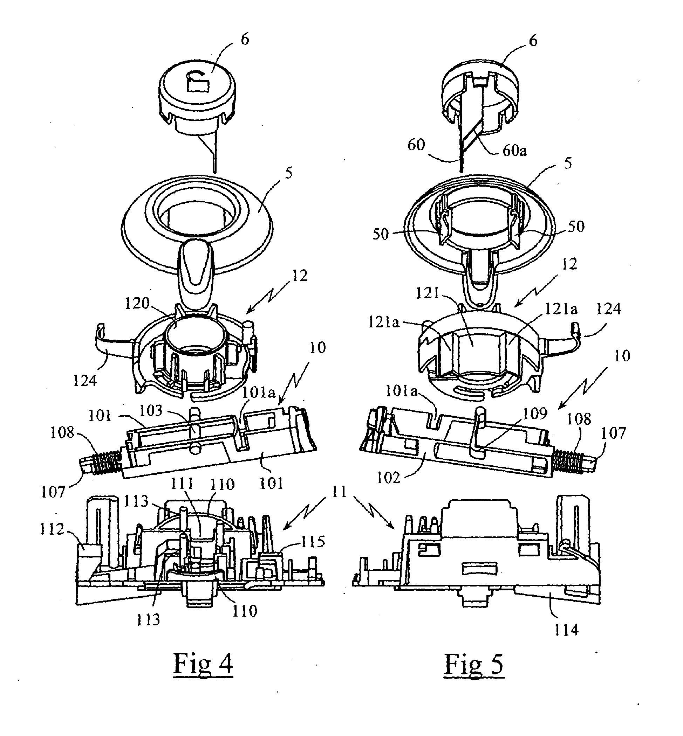

Ce dispositif de sécurité, représenté de façon éclatée sur les figures 4 et 5, comporte une tige de sécurité 10 qui est prise en sandwich entre une platine support 11 et une couronne 12 entraînée en rotation par le bouton de commande 5 du moteur.

La platine support 11 comporte un plan de base disposé horizontalement dans le caisson 3 et présente des portions de guidage cylindriques 110, inclinées vers l'avant, en faisant un angle de l'ordre de 40° par rapport à la verticale, les extrémités supérieures des portions de guidage 110 servant de plan d'appui à la couronne 12. Ce plan d'appui est perpendiculaire à la direction axiale des portions de guidage 110 et comporte une cavité, ménagée entre les portions de guidage cylindrique, servant de logement à la tige de sécurité 10.

La tige de sécurité 10 présente un corps formé essentiellement de deux parois latérales 101 reliées entre elles par des cloisons transversales 102 et comporte, sensiblement à mi-chemin entre ses deux extrémités longitudinales, un axe transversal 103 constituant un axe de pivotement de la tige de sécurité.

La tige de sécurité 10 comporte également, avantageusement, une languette élastique 109, visible sur la figure 5, située dans le prolongement de l'axe transversal 103.

L'axe transversal 103 repose sur la platine 11 dans des encoches 111 réalisées dans la partie supérieure des deux parois de la platine adjacentes à la tige de sécurité, l'axe transversal 103 présentant une inclinaison de l'ordre de 40° par rapport à l'horizontal.

Les encoches 111 s'étendent horizontalement sur une longueur supérieure au diamètre de l'axe transversal 103 de sorte que la tige 10 peut se translater longitudinalement dans les encoches 111, la translation de la tige 10 sur la platine 11 s'effectuant radialement au couvercle 7 lorsque ce dernier est positionné sur le récipient 2.

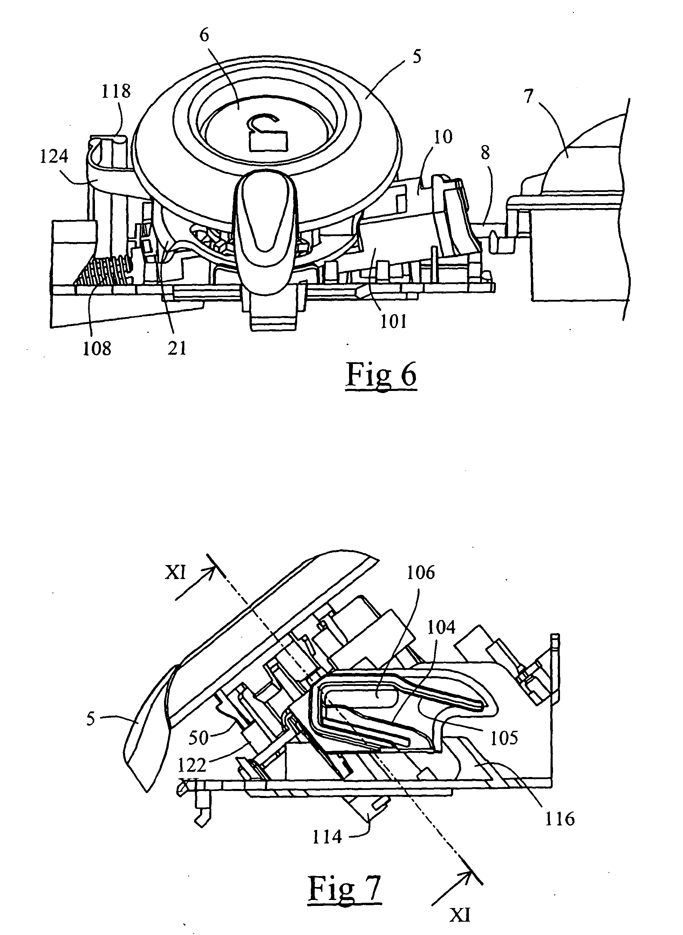

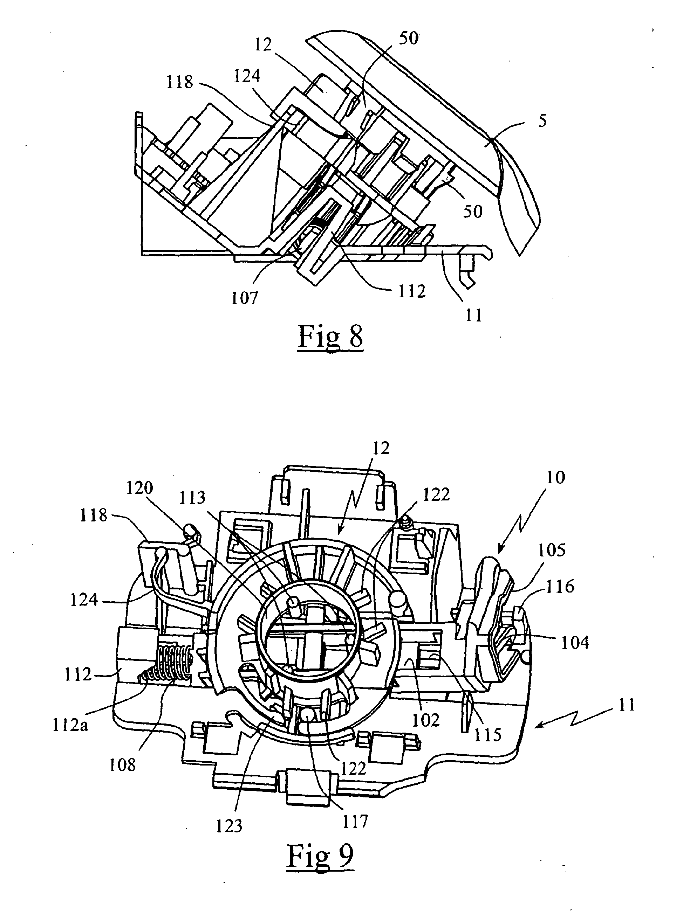

Comme on peut mieux le voir sur les figures 6 et 7, la tige de sécurité 10 présente une extrémité, venant en regard de la fente du caisson 3, qui est munie d'une rampe d'actionnement inférieure 104 et d'une rampe d'actionnement supérieure 105 destinées à coopérer avec la patte 8 du couvercle 7. Cette extrémité comporte également une cavité 106 adaptée pour recevoir l'extrémité de la patte 8 du couvercle 7.

La tige de sécurité 10 comporte à son extrémité opposée, mieux visible sur la figure 8, une languette 107 s'insérant entre les deux branches d'un élément de guidage 112 porté par la platine. Cette languette 107 est entourée d'un ressort de rappel 108 qui prend appui d'une part sur le corps de la tige 10 et d'autre part sur un plan incliné 112a de l'élément de guidage 112.

Conformément à la figure 9, qui représente le dispositif de sécurité sans le bouton de commande 5 du moteur et sans le bouton de déverrouillage 6 du couvercle, la couronne 12 est rapportée sur la platine 11, au-dessus de la tige de sécurité 10. Cette couronne comporte une partie cylindrique 120 venant autour de trois pions 113 équidistants faisant saillie à la surface de la platine 11, ces trois pions 113 étant perpendiculaires au plan d'appui de la couronne 12 et prenant place en bordure de la surface interne de la partie cylindrique 120 pour assurer le guidage en rotation de la couronne 12. La couronne 12 est également munie d'une languette élastique 124 qui vient en appui contre une paroi 118 de la platine.

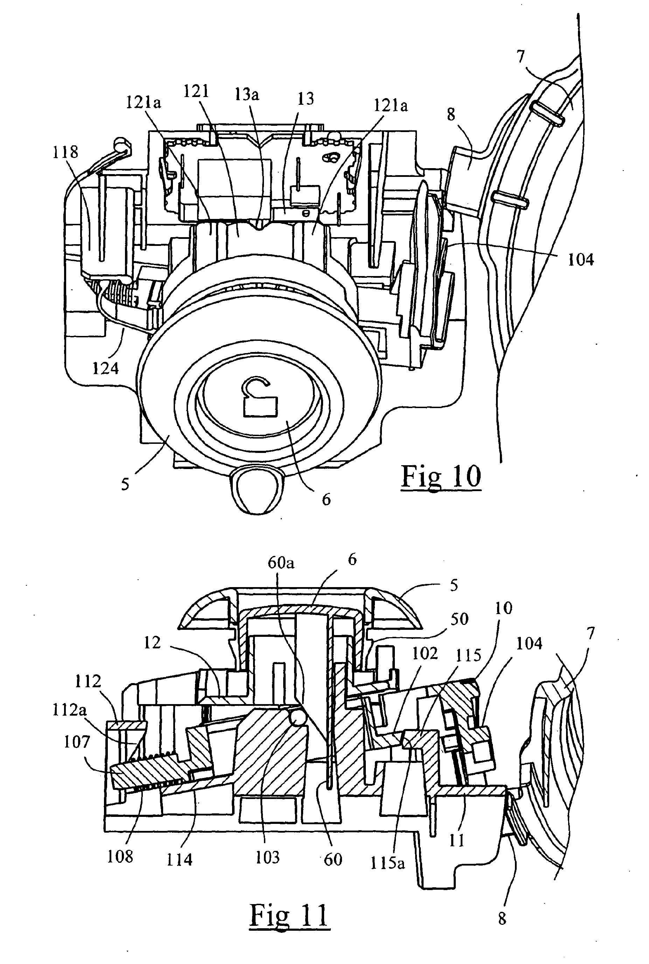

La couronne 12 comporte une jupe arrière 121 en arc de cercle qui s'étend vers la platine 11, parallèlement aux pions 113, et présente deux bossages 121a, mieux visibles sur la figure 10. Ces bossages 121 a viennent en contact avec une pliure 13a formée sur une lame de contact 13 de l'interrupteur commandant l'alimentation du moteur lors de la rotation de la couronne 12, de manière à déplacer la lame de contact 13 et la fermer cet interrupteur.

Le bouton de commande 5 du moteur qui est rapporté sur la couronne 12, par l'extérieur du caisson 3, comporte une ouverture centrale cylindrique bordée par trois doigts 50 qui prennent place autour de la partie cylindrique 120 de la couronne 12 en s'insérant entre des nervures 122 de sorte que la couronne 12 est rendue solidaire en rotation du bouton de commande 5.

Le bouton de déverrouillage 6 du couvercle 7 est rapporté au centre du bouton de commande 5 et comporte une languette 60 s'étendant axialement à l'ouverture centrale. Cette languette 60 comprend une rampe 60a venant prendre appui sur un bord de l'axe transversal 103 de la tige de sécurité 10 de sorte que l'enfoncement du bouton de déverrouillage 6 provoque une translation de l'axe transversal 103 dans les encoches 111 dans le sens de l'éloignement de la tige de sécurité 10 par rapport au couvercle 7.

Le fonctionnement du dispositif de sécurité va maintenant être décrit.

Comme on peut le voir notamment sur les figures 6 et 8, la tige de sécurité 10 peut occuper une première position, dite déverrouillée, dans laquelle le côté de la tige de sécurité 10 muni des rampes d'actionnement 105 et 106 est soulevé par rapport au plan horizontal de la platine, l'extrémité opposée de la tige 10 se trouvant alors dans un renfoncement incliné 114 de la platine 11 dont le fond fait office de butée de pivotement. Cette position déverrouillée correspond à la position qu'occupe la tige de sécurité 10 lorsque la patte 8 du couvercle 7 est désengagée de la fente du caisson 3, par exemple lorsque le couvercle 7 n'est pas présent sur le récipient 2.

Dans cette position, également représentée en coupe sur la figure 11, la tige de sécurité 10 se trouve décalée longitudinalement à l'opposé du couvercle 7 de sorte que l'axe transversal 103 se trouve en appui contre le bord de l'encoche 111 opposé au couvercle 7. Le ressort 108 présent sur la tige de sécurité 10 est alors dans une position sensiblement détendue et la tige de sécurité 10 présente une cloison transversale inférieure 102 qui est en appui contre le bord latéral de la tête d'un crochet 115 porté par la platine, la tête du crochet 115 s'insérant entre les parois latérales de la tige de sécurité 10. Le bord latéral 115a de la tête du crochet 115 sert, dans cette position, de butée longitudinale à la tige de sécurité 10 de sorte que l'axe transversal 103 de la tige 10 est bloquée longitudinalement dans l'encoche 111.

La tige de sécurité 10 est entraînée vers cette position basculée par le couple de rappel généré par l'effort de détente du ressort 108 sur le plan incliné 112a, cet effort étant avantageusement complété par l'effort de rappel de la languette élastique 109 portée par la tige de sécurité 10 qui prend alors appui contre une paroi de la platine 11.

Dans cette position déverrouillée, la rotation de la couronne 12, est empêchée par la partie de la paroi latérale 101 de la tige de sécurité qui se trouve en regard des extrémités latérales de la jupe arrière 121 de la couronne 12, la jupe 121 s'étendant sur un secteur angulaire tel que les extrémités latérales de cette dernière viennent à proximité immédiate de la paroi latérale 101 de la tige de sécurité 10. Il en résulte une impossibilité de tourner le bouton de commande 5 du moteur lorsque la tige de sécurité 10 est en position déverrouillée.

Le bouton de déverrouillage 6 du couvercle 7 présente alors la particularité d'être légèrement enfoncé à l'intérieur du bouton de commande 5 du fait du déplacement par gravité du bouton de déverrouillage 6 jusqu'à ce que la rampe 60a soit en appui contre l'axe transversal 103 qui se trouve alors contre le bord de l'encoche 111 opposé au couvercle 7.

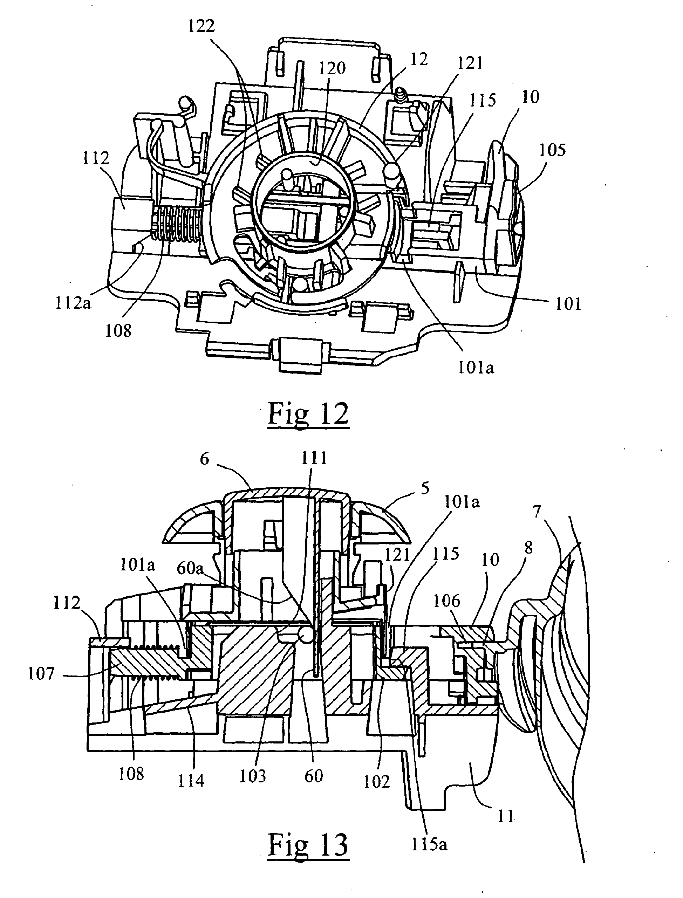

Lorsque le couvercle 7 est posé sur le récipient 2 puis est tourné pour son verrouillage, la patte 8 de verrouillage du couvercle 7 est amenée au travers de la fente 9 du caisson 3 puis est guidée verticalement par un ergot 116 porté par la platine 11, visible notamment sur la figure 7, de sorte que la patte de verrouillage 8 vient au contact de la rampe d'actionnement inférieure 104 de l'extrémité de la tige. L'appui de la patte de verrouillage 8 sur la rampe inférieure 104 génère alors un effort vers le bas sur l'extrémité de la tige de sécurité 10 qui tend à faire pivoter la tige de sécurité 10 vers une position horizontale où l'extrémité de la tige munie de la rampe d'actionnement 104 se trouve en appui contre le plan de base horizontal de la platine 11, comme cela est notamment représentée sur les figures 12 à 15.

Lors du pivotement de la tige de sécurité 10 vers cette position, le ressort 108 de la tige de sécurité 10 se comprime progressivement du fait de son contact avec le plan incliné 112a, la tige de sécurité 10 étant dans un premier temps bloquée longitudinalement par l'appui de sa cloison transversale 102 inférieure contre le bord 115a de la tête du crochet 115. Lorsque le pivotement de la tige de sécurité 10 est tel que son corps devient sensiblement parallèle au plan de base horizontal de la platine 11, la cloison transversale 102 inférieure de la tige 10 peut s'engager sous la tête du crochet 115, ce qui permet un mouvement longitudinalement de la tige de sécurité 10 vers le couvercle 7 sous l'effort du ressort 108. Lors de ce mouvement de translation de la tige de sécurité 10, l'extrémité de la patte de verrouillage 8 s'enfonce dans la cavité 106 complémentaire de l'extrémité de la tige de sécurité de sorte que le couvercle 7 est alors immobilisé sur le récipient 2.

Une telle translation de la tige de sécurité 10 provoque simultanément la remonté du bouton de déverrouillage 6 du couvercle dont la surface extérieure se trouve alors affleurante avec la surface extérieure du bouton de commande 5, ce qui présente l'avantage de marquer visuellement le bon verrouillage du couvercle 7.

Dans cette position verrouillée, la rotation et le soulèvement du couvercle 7 au niveau de la tige de sécurité 10 est empêchée par le crochet 115 de la platine 11 qui bloque verticalement la tige de sécurité 10. Cette immobilisation du couvercle 7 est complétée par la coopération de la plaque d'accrochage 7b avec le tenon 2b du bord latéral de la poignée 2a.

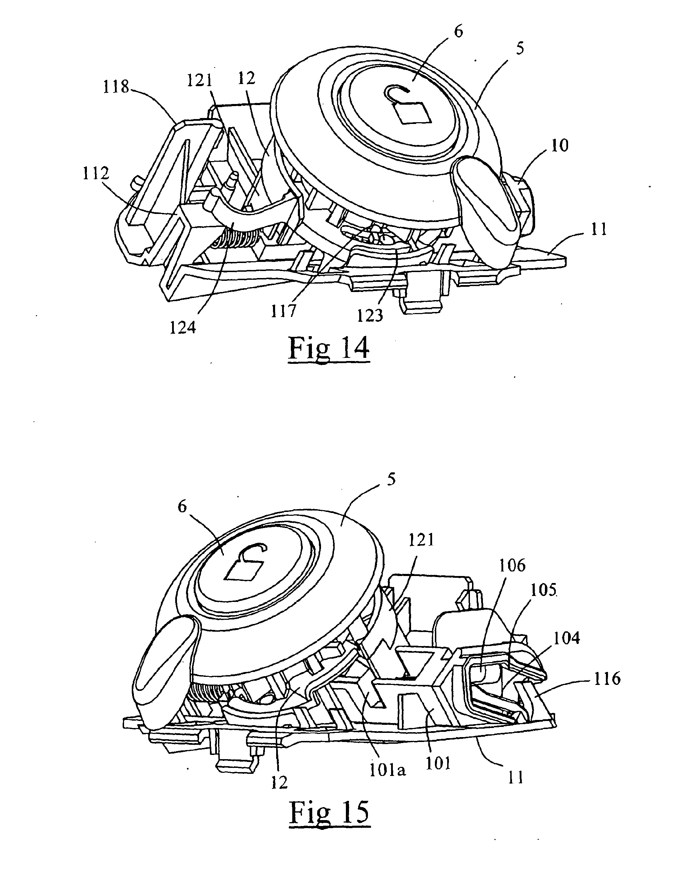

La rotation du bouton de commande 5 dans les deux sens pour la mise en marche de l'appareil, par l'interaction des bossages 121 de la couronne 12 avec l'interrupteur du moteur, est alors permise par la présence de deux rainures circulaires 101 a dans les parois latérales de la tige de sécurité 10 qui se trouvent alors en regard des extrémités latérales de la jupe arrière 121 de la couronne ainsi que cela est représenté sur les figures 12 et 13. Une telle insertion de la jupe arrière 121 au travers des rainures 101 a par rotation, représentée sur les figures 14 et 15, empêche alors tout mouvement de recul de la tige de sécurité 10 ce qui permet d'empêcher tout déverrouillage du couvercle 7, même si l'utilisateur appuie simultanément sur le bouton de déverrouillage 6.

La figure 14 illustre à titre d'exemple, la rotation du bouton de commande 5 dans le sens anti-horaire qui permet d'obtenir la mise en marche continue du moteur de l'appareil, la couronne 12 se trouvant immobilisée en position marche par l'interaction d'un bossage élastique 123 avec un doigt 117 porté par la platine.

La figure 15 illustre la rotation du bouton de commande 5 dans le sens horaire qui permet d'obtenir un fonctionnement du moteur de l'appareil par impulsion, la rotation de la couronne 12 s'effectuant alors en contraignant la languette élastique 124 portée par la couronne 12 dont l'extrémité est en appui contre la paroi 118 de la platine de sorte que le bouton de commande 5 est rappelé élastiquement dans sa position initiale d'arrêt lorsqu'il est relâché.

Lorsque l'utilisateur souhaite déverrouiller le couvercle 7, il ramène, si nécessaire, le bouton de commande 5 dans sa position d'arrêt et appuie sur le bouton poussoir 6 de manière à ce que l'effort généré par la rampe d'actionnement 60a sur l'axe transversal 103 provoque le déplacement longitudinalement de la tige de sécurité 10 dans le sens de son éloignement du couvercle 7, un tel déplacement permettant de libérer la patte de verrouillage 8 de la cavité 106 de la tige 10. L'utilisateur applique ensuite un couple de rotation au couvercle 7 dans le sens horaire de sorte que la patte de verrouillage 8 vient en appui contre la rampe supérieure 105 de l'extrémité de la tige 10, ce qui conduit au basculement de la tige de sécurité 10 vers sa position déverrouillée, ce basculement étant assisté par l'effort du ressort 108 sur le plan incliné 112a de l'élément de guidage 112 de la platine ainsi que par la languette élastique 109 de la tige de sécurité.

Un tel dispositif de sécurité présente donc l'avantage d'empêcher tout fonctionnement du moteur de l'appareil lorsque le couvercle n'est pas correctement verrouillé sur le caisson et la poignée du récipient. De plus, un tel dispositif de sécurité présente l'avantage d'une grande compacité avec un nombre réduit de pièces et offre une grande ergonomie d'utilisation en permettant la disposition concentrique du bouton de commande du moteur et du bouton de déverrouillage du couvercle.

Enfin, un tel dispositif de sécurité permet de s'affranchir d'un dispositif de frein sur l'outil en ne permettant pas l'ouverture immédiate du couvercle après l'arrêt du moteur. En effet, après avoir ramené le bouton de commande du moteur dans sa position d'arrêt, l'utilisateur est obligé d'actionné le bouton de déverrouillage et de tourner simultanément le couvercle pour obtenir l'ouverture, ce qui ralentit suffisamment l'ouverture pour que l'outil s'arrête naturellement de tourner.

Bien entendu, l'invention est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention tel que défini par les revendications.

## Revendications

1. Appareil électroménager de préparation culinaire comportant un boîtier comprenant un socle (1) sur lequel repose un récipient de travail (2) et un caisson (3) adjacent audit récipient (2), le boîtier comportant un moteur entraînant un outil rotatif (4) dont le fonctionnement est géré au moyen d'un bouton de commande (5), le récipient de travail (2) comportant un couvercle amovible (7), du type à verrouillage par rotation, muni d'une patte de verrouillage (8) s'insérant dans une fente (9) pratiquée dans le caisson (3) pour coopérer avec un dispositif de sécurité assurant le verrouillage du couvercle (7) et empêchant l'actionnement du bouton de commande (5) lorsque le couvercle n'est pas verrouillé, le déverrouillage du couvercle (7) s'effectuant par l'actionnement d'un bouton de déverrouillage (6), **caractérisé en ce que** le dispositif de sécurité comporte une tige de sécurité (10) dont une extrémité vient au contact avec la patte de verrouillage (8) lors de la fermeture du couvercle (7), ladite tige de sécurité (10) se déplaçant suivant un mouvement de rotation et de translation lors de la rotation du couvercle (7) en vue de son verrouillage et **en ce que** le bouton de commande (5) du moteur et le bouton de déverrouillage (6) du couvercle (7) sont regroupés sur une même face de l'appareil.

2. Appareil électroménager selon la revendication 1, **caractérisé en ce que** le bouton de commande (5) du moteur et le bouton de déverrouillage (6) sont concentriques et sont disposés sur le caisson (3) à proximité de la tige de sécurité (10).

3. Appareil électroménager selon la revendication 2, **caractérisé en ce que** le bouton de commande du moteur (5) entoure le bouton de déverrouillage (6), ledit bouton de commande du moteur (5) étant du type rotatif et le bouton de déverrouillage (6) étant du type poussoir.

4. Appareil électroménager selon la revendication 3, **caractérisé en ce que** le bouton de déverrouillage (6) occupe deux positions d'enfoncement distinctes en fonction de l'état du verrouillage de la tige de sécurité (10).

5. Appareil électroménager selon l'une quelconque des revendications 1 à 4, **caractérisé en ce que** la tige de sécurité (10) est montée pivotante autour d'un axe (103) pouvant se déplacer en translation au travers d'un logement (111) réalisé sur une platine support (11).

6. Appareil électroménager selon la revendication 5, **caractérisé en ce que** l'axe (103) de pivotement de la tige de sécurité (10) est incliné par rapport au plan de rotation du couvercle (7).

7. Appareil électroménager selon l'une quelconque des revendications 5 à 6, **caractérisé en ce que** l'extrémité de la tige de sécurité (10) comporte une rampe de guidage (104) de telle sorte que l'appui de la patte du couvercle (7) sur ladite rampe de guidage (104) provoque le mouvement de pivotement de la tige de sécurité (10).

8. Appareil électroménager selon l'une quelconque des revendications 5 à 7, **caractérisé en ce que** l'extrémité de la tige de sécurité (10) comporte une cavité (106) dans laquelle s'insère l'extrémité de la patte de verrouillage (8) lorsque la tige de sécurité (10) est déplacée radialement au couvercle (7) et en direction de la patte de verrouillage (8) du couvercle (7), sous l'effet de moyens de rappel (108), au cours de l'opération de verrouillage du couvercle (7).

9. Appareil électroménager selon la revendication 8, **caractérisé en ce que** les moyens de rappel sont constitués par un ressort (108) porté par l'extrémité de la tige opposée au couvercle (7) et **en ce que** le ressort (108) prend appui sur un plan incliné (112a) de la platine support (11) de sorte que le pivotement de la tige de sécurité (10) lors du verrouillage du couvercle (7) provoque la compression du ressort (108).

10. Appareil électroménager selon l'une quelconque des revendications 5 à 9, **caractérisé en ce que** le mouvement de translation de la tige de sécurité (10) s'effectue successivement à son mouvement de pivotement, la platine support (11) comportant un crochet de verrouillage (115) sur lequel vient buter une paroi (102) de la tige de sécurité (10) avant le pivotement complet de cette dernière et **en ce que**, une fois le pivotement de la tige de sécurité effectué, la paroi (102) de la tige de sécurité (10) s'insère par translation sous le crochet de verrouillage (115).

11. Appareil électroménager selon les revendications 3 et 5 à 10, **caractérisé en ce que** le bouton de déverrouillage (6) comporte une surface inclinée (60) venant au contact de la tige de sécurité (10) qui provoque le déplacement de la tige de sécurité (10) à l'encontre des moyens de rappel (108) lorsque l'on appuie sur le bouton de déverrouillage (6).

12. Appareil électroménager selon l'une quelconque des revendications 3 à 11, **caractérisé en ce que** le corps de la tige de sécurité (10) s'oppose à l'actionnement du bouton de commande (5) du moteur lorsque la tige de sécurité (10) est dans la position correspondant à la position déverrouillée du couvercle (7).

13. Appareil électroménager selon les revendications 3 et 12, **caractérisé en ce que** le bouton de commande (5) est lié en rotation à une couronne (12) et **en ce que** la couronne (12) comporte une partie (121) interférant avec le corps de la tige de sécurité (10) pour empêcher la rotation du bouton de commande (5) lorsque la tige de sécurité (10) est dans la position déverrouillée.

14. Appareil électroménager selon la revendication 13, **caractérisé en ce que** la tige de sécurité (10) comporte des ouvertures (101a) venant en regard de ladite partie (121) de la couronne lorsque la tige de sécurité (10) est dans la position verrouillée de sorte que le bouton de commande (5) puisse être tourné.

## Claims

1. A household electrical appliance for preparing food, the appliance comprising a box having a stand (1) on which there rests a working receptacle (2) and a case (3) adjacent to said receptacle (2), the box containing a motor driving a rotary tool (4) whose operation is managed by means of a control member (5), the working receptacle (2) having a removable lid (7) of the type that is lockable by being turned, being provided with a locking tab (8) that becomes inserted in a slot (9) formed in the case (3) to co-operate with a safety device for locking the lid (7) and for preventing the control member (5) being actuated while the lid is not locked, the lid (7) being unlocked by acting on an unlocking member (8), the appliance being **characterized in that** the safety device comprises a safety rod (10) having one end coming into contact with the locking tab (10) when the lid (7) is closed, said safety rod (10) moving in rotation and in translation while the lid (7) is being turned for locking purposes, and **in that** the member (5) for controlling the motor and the member (6) for unlocking the lid (7) are grouped together on a common face of the appliance.

2. A household electrical appliance according to claim 1, **characterized in that** the motor control member (5) and the unlocking member (6) are concentric and are disposed on the case (3) close to the safety rod (10).

3. A household electrical appliance according to claim 2, **characterized in that** the motor control member (5) surrounds the unlocking member (6), said motor control member (5) being of the rotary-knob type and the unlocking member (6) being of the pushbutton type.

4. A household electrical appliance according to claim 3, **characterized in that** the unlocking member (6) occupies two distinct depressed positions as a function of the locking state of the safety rod (10).

5. A household electrical appliance according to any one of claims 1 to 4, **characterized in that** the safety rod (10) is mounted to pivot on a pin (103) capable of moving in translation through a housing (111) made on a support piate (11).

6. A household electrical appliance according to claim 5, **characterized in that** the pivot pin (103) of the safety rod (10) is inclined relative to the plane of rotation of the lid (7).

7. A household electrical appliance according to claim 5 or claim 6, **characterized in that** the end of the safety rod (10) has a guide ramp (104) such that pressing the tab of the lid (7) against said guide ramp (104) causes the safety rod (10) to pivot.

8. A household electrical appliance according to any one of claims 5 to 7, **characterized in that** the end of the safety rod (10) includes a cavity (106) into which the end of the locking tab (8) becomes inserted when the safety rod (10) is moved radially relative to the lid (7) towards the locking tab (8) of the lid (7) under drive from return means (108) during the operation of locking the lid (7).

9. A household electrical appliance according to claim 8, **characterized in that** the return means are constituted by a spring (108) carried by the end of the rod opposite from the lid (7), and **in that** the spring (108) bears against an inclined plane (112a) of the support plate (11) such that the pivoting of the safety rod (10) during locking of the lid (7) causes the spring (108) to be compressed.

10. A household electrical appliance according to any one of claims 5 to 9, **characterized in that** the movement in translation of the safety rod (10) takes place after its movement in pivoting, the support plate (11) including a locking hook (115) against which a wall (102) of the safety rod (10) comes into abutment before the rod has completed pivoting, and **in that** once the pivoting of the safety rod has been performed, the wall (102) of the safety rod (10) becomes inserted in translation under the locking hook (115).

11. A household electrical appliance according to claims 3 and 5 to 10, **characterized in that** the unlocking member (6) includes an inclined surface (60) coming into contact with the safety rod (10) causing the safety rod (10) to move against the return means (108) when the unlocking member (6) is depressed.

12. A household electrical appliance according to any one of claims 3 to 11, **characterized in that** the body of the safety rod (10) opposes actuating the motor control knob (5) while the safety rod (10) is in its position corresponding to the unlocked position of the lid (7).

13. A household electrical appliance according to claims 3 and 12, **characterized in that** the control knob (5) is connected in rotation with a ring (12), and **in that** the ring (12) includes a portion (121) that interferes with the body of the safety rod (10) to prevent the control knob (5) turning when the safety rod (10) is in the unlocked position.

14. A household electrical appliance according to claim 13, **characterized in that** the safety rod (10) includes opening (101 a) coming into register with said portion (121) of the ring when the safety rod (10) is in the locked position, such that the control knob (5) can be turned.

## Patentansprüche

1. Elektrisches Haushaltsgerät zur Nahrungsmittelzubereitung, mit einem Gehäuse, das einen Sockel (1) aufweist, auf welchem ein Arbeitsbehälter (2) aufliegt, und einem an den Behälter (2) angrenzenden Kasten (3), wobei das Gehäuse einen Motor aufweist, der ein Drehwerkzeug (4) antreibt, dessen Betrieb mittels eines Steuerknopfs (5) angesteuert wird, wobei der Arbeitsbehälter (2) einen abnehmbaren Deckel (7) vom Typ mit Drehverriegelung aufweist, der mit einer Verriegelungslasche (8) versehen ist, die sich in einen im Kasten (3) eingebrachten Schlitz (9) einfügt, um mit einer Sicherheitsvorrichtung zusammenzuwirken, die die Verriegelung des Deckels sichert und das Betätigen des Steuerknopfs (5) verhindert, wenn der Deckel nicht verriegelt ist, wobei das Verriegeln des Deckels (7) durch Betätigen eines Entriegelungsknopfs (6) erfolgt, **dadurch gekennzeichnet, dass** die Sicherheitsvorrichtung eine Sicherheitsstange (10) aufweist, von welcher ein Ende mit der Verriegelungslasche (8) beim Schließen des Deckels (7) in Kontakt kommt, wobei sich die Sicherheitsstange (10) gemäß einer Dreh- und Translationsbewegung verschiebt, wenn der Deckel (7) im Hinblick auf seiner Verriegelung gedreht wird, und dass der Knopf (5) zur Steuerung des Motors und der Knopf (6) zur Entriegelung des Deckels (7) auf derselben Seite des Geräts zusammengefasst sind.

2. Elektrisches Haushaltsgerät nach Anspruch 1, **dadurch gekennzeichnet, dass** Knopf (5) zur Steuerung des Motors und der Knopf (6) zur Entriegelung des Deckels konzentrisch und auf dem Kasten (3) in der Nähe der Sicherheitsstange (10) angeordnet sind.

3. Elektrisches Haushaltsgerät nach Anspruch 2, **dadurch gekennzeichnet, dass** der Knopf (5) zur Steuerung des Motors den Knopf (6) zur Entriegelung des Deckels umgibt, wobei der Knopf (5) zur Steuerung des Motors ein Drehknopf und der Entriegelungsknopf (6) ein Druckknopf ist.

4. Elektrisches Haushaltsgerät nach Anspruch 3, **dadurch gekennzeichnet, dass** der Entriegelungsknopf (6) je nach Zustand der Verriegelung der Sicherheitsstange (10) zwei Stellungen unterschiedlicher Tiefe einnimmt.

5. Elektrisches Haushaltsgerät nach einem der Ansprüche 1 bis 4, **dadurch gekennzeichnet, dass** die Sicherheitsstange (10) um eine Achse (103) schwenkbar angebracht ist, die sich translatorisch durch eine Aufnahme (111) verschieben kann, die auf einer Tragplatte (11) eingebracht ist.

6. Elektrisches Haushaltsgerät nach Anspruch 5, **dadurch gekennzeichnet, dass** die Schwenkachse (103) der Sicherheitsstange (10) in bezug auf die Rotationsebene des Deckels (7) geneigt ist.

7. Elektrisches Haushaltsgerät nach einem der Ansprüche 5 bis 6, **dadurch gekennzeichnet, dass** das Ende der Sicherheitsstange (10) eine Führungsrampe (104) aufweist, so dass die Anlage der Lasche des Deckels (7) an der Führungsrampe (104) die Schwenkbewegung der Sicherheitsstange (10) hervorruft.

8. Elektrisches Haushaltsgerät nach einem der Ansprüche 5 bis 7, **dadurch gekennzeichnet, dass** das Ende der Sicherheitsstange (10) einen Hohlraum (106) aufweist, in welchen sich das Ende der Verriegelungslasche (8) einfügt, wenn die Sicherheitsstange (10) während das Verriegeln des Deckels (7) unter der Wirkung von Rückstellmittel (108) radial zum Deckel (7) und in Richtung der Verriegelungslasche (8) des Deckels (7) verschoben wird.

9. Elektrisches Haushaltsgerät nach Anspruch 8, **dadurch gekennzeichnet, dass** die Rückstellmittel aus einer Feder (108) bestehen, die vom Ende der dem Deckel (7) gegenüberliegenden Stange getragen ist, und dass die Feder (108) an einer geneigten Ebene (112a) der Tragplatte (11) anliegt, so dass das Schwenken der Sicherheitsstange (10) während der Verriegelung des Deckels (7) das Zusammendrücken der Feder (108) hervorruft.

10. Elektrisches Haushaltsgerät nach einem der Ansprüche 5 bis 9, **dadurch gekennzeichnet, dass** die Translationsbewegung der Sicherheitsstange (10) nach deren Schwenkbewegung erfolgt, wobei die Tragplatte (11) einen Verriegelungshaken (115) aufweist, gegen welchen eine Wand (102) der Sicherheitsstange (10) vor deren vollständigem Schwenken anschlägt, und dass sich die Wand (102) der Sicherheitsstange (10) nach erfolgtem Schwenken translatorisch unterhalb des Verriegelungshaken (115) einfügt.

11. Elektrisches Haushaltsgerät nach den Ansprüche 3 und 5 bis 10, **dadurch gekennzeichnet, dass** der Entriegelungsknopf (6) einen geneigte Fläche (60) aufweist, die mit der Sicherheitsstange (10) in Kontakt kommt und die Verschiebung der Sicherheitsstange (10) gegen die Rückstellmittel (108) hervorruft, wenn der Entriegelungsknopf (6) eingedrückt wird.

12. Elektrisches Haushaltsgerät nach einem der Ansprüche 3 bis 11, **dadurch gekennzeichnet, dass** der Körper der Sicherheitsstange (10) der Betätigung des Steuerknopfs (5) für den Motor entgegenwirkt, wenn sich die Sicherheitsstange (10) in der Stellung befindet, die der entriegelten Stellung des Deckels (7) entspricht.

13. Elektrisches Haushaltsgerät nach den Ansprüche 3 bis 12, **dadurch gekennzeichnet, dass** der Steuerknopf (5) mit einem Kranz (12) drehverbunden ist und dass der Kranz (12) einen Teil (121) aufweist, die mit dem Körper der Sicherheitsstange (10) eingreift, um das Drehen des Steuerknopfs (5) zu verhindern, wenn sich die Sicherheitsstange (10) in der Entriegelungsstellung befindet.

14. Elektrisches Haushaltsgerät nach Anspruch 13, **dadurch gekennzeichnet, dass** die Sicherheitsstange (10) Öffnungen (101a) aufweist, die dem Teil (121) des Kranzes gegenüberstehen, wenn sich die Sicherheitsstange (10) in der verriegelten Stellung befindet, so dass der Steuerknopf (5) gedreht werden kann.
